# EUROPEAN PATENT SPECIFICATION

(11) **EP 1 151 922 B1**
(45) Date of publication and mention of the grant of the patent: **19.10.2005**
(21) Application number: 01830268.7
(22) Date of filing: 23.04.2001
(51) Int. Cl.: F16J 15/06

(54) **Aseptic seal for fluids or foodstuffs in general for nourishment**
Aseptische Dichtung für Flüssigkeiten oder Lebensmittel im Allgemeinen für Ernährung
Etanchéité aseptique pour fluides et comestibles en général pour l'alimentation

(30) Priority: 05.05.2000 IT PC000015
(43) Date of publication of application: 07.11.2001
(73) Proprietor: Crespi, Carlo, 29028 Ponte dell'Olio (Piacenza) (IT)
(72) Inventor: Crespi, Carlo, 29028 Ponte dell'Olio (Piacenza) (IT)
(74) Representative: La Ciura, Salvatore

(56) References cited:
- DE-A- 3 224 039
- DE-A- 3 835 505
- US-A- 6 027 123

## Description

At the moment there are many seals for fluids, sauces or other foodstuffs for nourishment and they differ only for the conditions of resistance they have been made for. With regard to this it is useful to remember that the late laws, which are more and more difficult to evade, influence the choice of the materials that are to be used for the construction of these particular seals for fluids or products for nourishment. Due to this conditioning, scrupulous makers are greatly influenced in the choice of the materials that are to be used in this particular field. In fact we can say that, at the moment, there are materials that are qualified for fluids or products for nourishment, but they have different mechanical and technical characteristics and so they are difficult to be used. In order to describe better the present situation it is useful to remember that the pipes of the machine for the processing or the packaging of fluids or products for nourishment are often sterilized to avoid the formation of dangerous bacterial flora. The cycles of sterilization, usually performed at a temperature over 100°C, subject the seals to a thermic range that has a negative influence on their future performances with the risk of loss or decrease of their reliability. Moreover it is important to remember that one of the most important peculiarities of a good seal is represented by the capacity of the elastic memory of the material it is made with. For example a polyurethane has more mechanic-elastic memory than an elastomer and it offers less friction during the sliding. On the other hand the elastomer is more suitable for static seals and, if opportunely treated with an additive it bears higher temperatures than a polyurethane, but it has poor elastic memory. So much so the most sliding seals made with additivated elastomers or only with reflon (PTFE) bear temperatures up to 200°C but they have to be provided with a stainless steel spring or with an O-ring; both of them have to be opportunely placed for stimulating and holding the elastic memory of the material. Due to this mechanic need the area of the seal can be attacked by an undesired and dangerous bacteriological proliferation. It can be deducted that the polymer plastics are to be preferred, when properly certified for the contact with foodstuffs in case the work conditions are less or equal to 120°C. The additivated elastomers or the virgin PTFE, when properly certified for the contact with foodstuffs, bear temperatures up to 200°C. After this prosper introduction about the materials it is important to mention the constructive design of the profiles of the seals to understand better the peculiarities of the invention. Strangely, at present, laws that are going to influence the choice of the profile of the seals do not exist maybe because only during the last few years laws influencing the choice of the materials used in contact with fluids or products for nourishment have been issued.

The choice of the profile of a seal in contact with fluids or foodsniffs must not be undervalued as the growth of dangerous bacterial flora all around can depend on it.

US 6.027.123 (D1) relates to a tank for transporting grease, oil, ink or the like, in which the volume of the tank is determined by the position of a piston provided with a seal which consists of an annular rubber member with a hollow chamber filled with an open cell foam material such as polyurethane, or a gel such as silica gel.

DE 3835505 The invention relates to a seal for reciprocating pistons or the like, which comprises a friction ring made of plastic, in particular teflon, and a buffer ring made of silicone rubber, which bears against the bottom of a groove which houses the seal.

The outline of the buffer ring has two recesses, and the rings bear against each other at the interface between the outer and the inner ring.

DE 32 24 039 shows a seal made of fibrous PFTE, which has a tubular, circular section, filled with an elastomeric material.

The task of the invention is to eliminate the above disadvantages carrying out a seal for fluids or foodstuffs which considers both the mechanic-physical properties of the materials and the choice of the seal profile.

In particular the task of the invention is to carry out a seal of easy application and reliability. The ultimate aiming of the invention is to make a seal named in the whole "**aseptic seal for fluids or foodstuffs**" able to guarantee a perfect bacterial cleaning all around it since it has not any inlets or profiles that can keep portion of product.

Further characteristic and advantages will be more evident in the description of a preferred, but not exclusive, execution form of an "**aseptic seal for fluids or foodstuffs**" approximately illustrated in the enclosed drawings in which:
Fig. 1 - represents a traditional lip seal;
Fig. 2 - represents schematically and cutaway, in its upper part, a lip seal and, in its lower part, the invention for a similar function;
Fig. 3 - represents a seal in PTFE memorized with a silicone O-ring;
Fig. 4 - represents the enlargement of the invention for temperatures up to 120°C;
Fig. 5 - represents schematically and cutaway a lip seal for piston;
Fig. 6 - represents schematically and cutaway the invention for a similar function;
Fig. 7 - represents the enlargement of the invention in alternative for temperatures up to 200° C;
Fig. 8 - represents schematically and cutaway a kind of casing of the invention;
Fig. 9 - represents schematically and cutaway the outer part of the invention;
Fig. 10 - represents schematically and cutaway the inner part of the invention

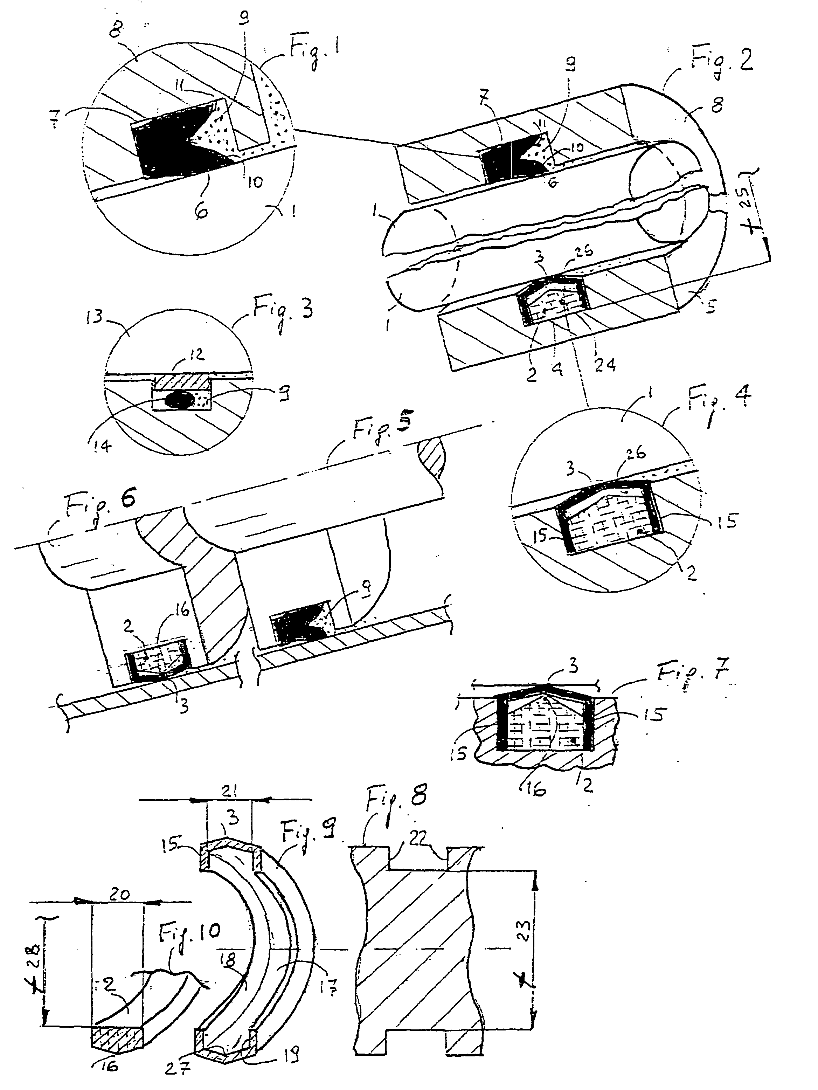

Referring to the above pictures, the "**aseptic seal for fluids or foodstuffs**" according to the invention, is seen, in the lower vertical section of fig. 2, as well as in the enlargement of fig. 4, seated in the housing fig. 2 (4) of the body. Again in fig. 2, in the upper vertical section and its enlargement of fig. 1, we can see a traditional lip seal, fig. 1 (6), seated in the housing, fig. 1 (7), of the body, fig. 1 (8). Looking at the vertical sections, both upper and lower of fig. 2 and their enlargements fig. 1 and fig. 4, we see that portions of product, fig. 1 (9) and fig. 2 (9), go only into the lip seal fig. 1 (6) and fig. 2 (6) and not in the invention. Infact in the lip seal fig. 1 (6) [at the moment the most widespread, whose effectiveness of operation is beyond dispute as it exploits the product pressure against the lips fig. 1 (10) and fig. 1 (11) as well as the elastic memory of the material] the quantity of product which is inside the round inlet formed by the lips is hardly changed during the work cycle, but it stagnates with the possibility of alteration and contamination of the product. Infact if the cycles of sterilization are not meticulous and careful, they may not be sufficient to guarantee an appropriate sterilization around the circumference of the seal: this circumstance underlines that the design of its profile is not suitable for the real sanitary measures required by the food industry. We can see another kind of seal in fig. 3: it is even less suitable for fluids and foodstuffs as probable bacterial flora are difficult to be removed. In this case the resistance is ensured by the pressure of the ring fig. 3 (12), usually in PTFE, against the rod fig. 3 (13). This pressure is obtained with the forced squeezing of the O-ring against the resistance ring fig. 3 (12). In this case, as the ring fig. 3 (12) does not produce any lateral resistance, it allows the infiltration inside the slat of housing, causing the dangerous conditions describes above. Summing up we have chosen the two most used kind of seals, regarding both the profiles and materials, where lip seals fig. 1 (6), are made with special plastomers suitable for fluids or foodstuffs when temperatures are lower than 120°C, with extra elastomers or virgin PTFE for temperatures higher than 120°C. In the last case, as already remembered, to the detriment of the elastic memory of the seal, which has to be added with other elements in silicone or still in order to be improved.

In conclusion we can say that in past times it was not given importance to possible stagnations around the seals while nowadays, due to the need to obey more and more severe recent laws, some important food industries feel the need to adopt new seals and they urge the makers in order to awaken them to the problem. On their behalf seals producers are conforming themselves only regarding the choice of the materials but they are not sensible to the problem of stagnation of product around the seals, maybe because of the market or because of the investments that a new concept of seal would require.

The aseptic seal for fluids and foodstuffs for nourishment, according to the invention, has been studied to prevent the possibility of infiltrations or stagnation of product around the seal so to avoid the possible formations of undesired bacterial flora. For this purpose the invention has always considered the real situation of the materials in use, suitable for the contact with foodstuffs, which can be easily found it and a particular design and combining of material has been performed for the above needs. To underline better the peculiarities of the invention we have divided the seals suitable for fluids and foodstuffs in two classes: A and B. In class A we have put the seals bearing temperatures up to 120°C, in class B seals up to 200°C. This choice is not accidental but it is conditioned by the objective reality of the available materials. Seals of class A have been realized using two materials with different technical-mechanical characteristics and two different functions. The same has been made for seals of class B. Specifically for class A seals we can see, in section (fig. 9), the external body of seal fig. 9 (15) made with plastomers as they are more resistant to sliding and erosion and moreover they have more elastic memory and mechanical tenacity (during dynamic movements) than elastomers. In fig. 10 we can see the inner part fig. 10 (16), which will be seated in the internal channel fig. 9 (17) of the outer body fig. 9 (15). The inner part fig. 10 (16), having only static function, is preferably realized in silicone as it has a good memory of compression in static applications, apart from being suitable for the contact with foodstuffs. Also in this case the choice of a material like silicone or with similar characteristics, is not accidental. Infact if we used a plastomer for the internal body fig. 9 (15) or if we made the whole seal in only one plastomer, we would obtain a seal with technical-mechanical characteristics different from the desired ones. Infact, to compress a seal with the characteristic of the invention made only with plastomeric material (which has a hardness higher than 90 SH) it would be necessary such a compression against the rod or the piston that it would not only destroy the seal, but it would need an enormous energetic spending.

At this purpose we remember that in bottling and packaging machines for foodstuffs very rarely a pressure of 3-5 bar is got over. Moreover such an operation is made at the same time by many feeding devices so that it is easy to imagine the sum of the above efforts and their consumption of energy to resist such pressures . On the contrary if we wanted to make the invention wholly in elastomeric material (which has a hardness less than 90 SH), we would have lower compressive stress of the seals against the rod or the piston, but, as the elastomers are less suitable to dynamic movements, we would have an early consumption. Now it seems clearer that the purpose of the invention is to make a seal for fluids and foodstuffs composed by two materials with different functions in order to exploit better their characteristics: the material in touch with the dynamic movements is the most suitable for sliding and resistance to erosion, while the material for the static compression is softer and more reliable. Now we can understand better, in class A seals, that the role of the ring fig. 10 (2) is to create a static compression against the external body of fig. 9. (15). Such a static compression, in seals of class A, has the only purpose to create a side-thrust against the inner part fig. 9 (18) and fig. 9 (19) of the internal body fig. 9 (15). This compression is released making resistance at its sides, from the shoulders fig. 9 (18) and fig. 9 (19) against the walls of the housing fig. 8 (22) of the casing of the seal. The compression of ring fig. 10 (2) against the shoulders fig. 9 (18) and fig. 9 (19) of external body fig. 9 (15) is ensured by the calibration of the difference of the joints between the wideness fig. 10 (20) and fig. 9 (21), as well as of the diameters fig. 10 (28) and fig. 8 (23). Infact being in piston-seals the diameter fig. 8 (23) bigger than the diameter fig. 10 (28), the material flows towards the top pushing to the sides and making resistance, once it is housed in the seat of the shoulders fig. 8 (22). In rod-seals [external diameter seal fig. 2 (24), external slot diameter fig. 2 (25)] the process is the reverse, that is to say: bigger external diameter of ring fig. 2 (24), smaller diameter of the housing of seal fig. 2 (25). The dynamic resistance is made exclusively by the profile fig. 2 (3), fig. 9 (3) that is simply the joining bay of the shoulders fig. 9 (15). In this case it is easy to understand that the compressive stress between the seal and the rod or piston can be calibrate better as the material of the seal is tougher but, being realized like a bridge [where the arc of fig. 9 (21) is pushed to the sides by the ring fig. 10 (2) and the thickness fig. 9 (3) of the external body fig. 9 (15) is compressible in the clear area fig. 2 (26) due to a better elastic memory of the material], its thickness can be calibrated due to the low pressures we have told before. So we obtain a whole seal that not only is more reliable from the aseptical point of view for its clear structural characteristics of "safe" locking, but it has a longer duration because of lower compressive stress.

Finally we will talk about class B seals, that is to say the seals for temperatures up to 200°C which are different for their characteristics but not for the purpose of the invention: infact to build the external body fig. 9 (15) we have chosen virgin PTFE, perfectly suitable for foodstuffs, but well known also for its very poor elastic memory. In this case we have realized fig. 9 maintaining the same design with a different material from the one used in class A seals, while in fig. 10 we have used the same material (silicone) as in class A seals but with a different function. Looking at figg. 6-7 we can see that the ring fig. 6 (2), fig. 7 (2) apart from developing the lateral compression against the shoulders fig. 9 (17), fig. 9 (18) and ensuring the seal in its housing as widely described for class A seals, develops a further effect of static compression between the apex fig. 6 (16), fig. 7 (16) of the ring fig. 6 (2), fig. 7 (2) and the internal apex fig. 9 (27) of the external body fig. 9 (15). This further peculiarity always keeps a predetermined pressure between the PTFE and the cylinder or rod giving continual memory to the point of seal fig. 6 (3), fig. 7 (3) of the PTFE bridge-shaped structure. Thus we have obtained a seal like those described in fig. 3 which has great smoothness and resistance to high temperatures, moreover, due to the above characteristics for class A seals, it does not allow the passage and the stagnation of the fluids around the seals.

Therefore we can conclude observing that the main characteristics of the invention is to eliminate the risks of development of undesired and dangerous bacterial flora around the seals for fluids or foodstuffs.

To finish with, we will say that all the details can be replaced by technically equivalent elements that is to say that the employed materials, provided that they are suitable for the specific utilisation and they have the contingent dimensions and shapes, can be modified within the scope of the appended claims.

## Claims

1. Aseptic seal for fluids or foodstuffs, to be seated into an annular groove having a bottom wall and two side walls (22), said seal comprising an inner ring (2) made of an elastomeric material and an outer body (15) made of a material suitable for dynamic sliding, **characterized in that** said outer body (15) forms an inner opened channel (17) with two shoulders or lateral walls (18, 19), in which said inner ring (2) is seated, such that the two shoulders or lateral walls (18, 19) will be compressed against the walls (22) of the housing, when seated into the annular groove.

2. Aseptic seal according to claim 1, **characterized in that** said inner ring (2) is made of silicone and said outer body (15) is made of a plastomer.

3. Aseptic seal according to daim 1, **characterized in that** said inner ring (2) is made of silicone and said outer body (15) is made of PTFE.

4. Aseptic seal according to claim 1, **characterized in that** the two shoulders or lateral walls (18, 19) of said outer body (15) are parallel to the side walls (22) of said annular groove.

5. Aseptic seal according to claim 2, **characterized in that** said outer body (15) has a convex or are-shaped structure.

## Patentansprüche

1. Aseptische Dichtung für Flüssigkeiten oder Lebensmittel, anzubringen in einer ringförmigen Rille mit einer Rückwand und zwei Seitenwänden (22), wobei besagte Dichtung einen Innenring (2) aus elastomerischem Material und einen Außenkörper (15) aus einem für dynamisches Gleiten geeigneten Material umfasst, charakterisiert durch die Tatsache, dass besagter Außenkörper (15) einen offenen Innenkanal (17) mit zwei Schultern oder Seitenwänden (18, 19) bildet, worin besagter Innenring (2) lagert, so dass die beiden Schultern oder Seitenwände (18, 19) gegen die Wände (22) des Sitzes gepresst werden, wenn sie sich in der ringförmigen Rille befindet.

2. Aseptische Dichtung nach Anspruch 1, charakterisiert durch die Tatsache, dass besagter Innenring (2) aus Silikon und besagter Außenkörper (15) aus einem Plastomer besteht.

3. Aseptische Dichtung nach Anspruch 1, charakterisiert durch die Tatsache, dass besagter Innenring (2) aus Silikon und besagter Außenkörper (15) aus PTFE besteht.

4. Aseptische Dichtung nach Anspruch 1, charakterisiert durch die Tatsache, dass die beiden Schultern oder Seitenwände (18, 19) des besagten Außenkörpers (15) parallel zu den Seitenwänden (22) der besagten ringförmigen Rille verlaufen.

5. Aseptische Dichtung nach Anspruch 2, charakterisiert durch die Tatsache, dass besagter Außenkörper (15) eine konvexe oder bogenförmige Struktur aufweist.

## Revendications

1. Joint aseptique pour fluides ou produits alimentaires, à loger dans une rainure annulaire composée d'un fond et de deux parois latérales (22), ledit joint comprenant un anneau interne (2) réalisé dans un élastomère et un corps externe (15) réalisé dans un matériau apte à assurer un glissement dynamique, qui se **caractérise par le fait que** ledit corps externe (15) forme un canal interne (17) ouvert, présentant deux épaulements ou parois latérales (18, 19) où se trouve ledit anneau interne (2), de façon que les deux épaulements ou parois latérales (18, 19) soient comprimés contre les parois (22) du logement quand celui-ci est placé dans la cannelure annulaire.

2. Joint aseptique selon la revendication n° 1, **caractérisé par le fait que** ledit anneau interne (2) est réalisé en silicone et que ledit corps externe (15) est réalisé dans un plastomère.

3. Joint aseptique selon la revendication n° 1, **caractérisé par le fait que** ledit anneau interne (2) est réalisé en silicone et que ledit corps externe (15) est en PTFE.

4. Joint aseptique selon la revendication n° 1, **caractérisé par le fait que** les deux épaulements ou parois latérales (18, 19) dudit corps externe (15) sont parallèles aux parois latérales (22) de ladite rainure annulaire.

5. Joint aseptique selon la revendication n° 2, **caractérisé par le fait que** ledit corps externe (15) présente une structure convexe ou en arc.
